# FASCICULE DE BREVET EUROPEEN

(11) **EP 3 194 086 B1**
(45) Date de publication et mention de la délivrance du brevet: **01.08.2018**
(21) Numéro de dépôt: 15770581.5
(22) Date de dépôt: 15.09.2015
(51) Int. Cl.: C03B 5/00, F23D 11/02, F23D 14/22, F23D 14/32, F23G 5/08, B09B 3/00, C03B 5/235

(54) **PROCÉDÉ DE VITRIFICATION EN CONTINU DE MATÉRIAUX FIBREUX**
VERFAHREN ZUR KONTINUIERLICHEN VERGLASUNG VON FASERMATERIALIEN
PROCESS FOR THE CONTINUOUS VITRIFICATION OF FIBROUS MATERIALS

(30) Priorité: 15.09.2014 FR 1458625
(43) Date de publication de la demande: 26.07.2017
(73) Titulaire: Pyro Green Innovations, 64600 Anglet (FR)
(72) Inventeur: BENICHOU, Anne, 33460 Arsac (FR); LAGOUTTE, Annie, 11600 Malves En Minervois (FR); MAURANCE, Xavier, 64600 Anglet (FR); PROOT, Jacques, Darlington, SC 29532 (US)
(74) Mandataire: Hubert, Philippe
(86) Numéro de dépôt international: PCT/FR2015/052460
(87) Numéro de publication internationale: WO 2016/042249

(56) Documents cités:
- EP-B1- 1 235 889
- WO-A1-2008/065031
- FR-A1- 2 909 994
- FR-A1- 2 927 327
- US-A1- 2005 096 495

## Description

La présente invention concerne généralement un procédé de traitement par vitrification en continu de matériaux fibreux, et en particulier de l'amiante et/ou de matériaux amiantés. Le document EP 1 235 889 B1 décrit un procédé de gaséification de composés pouvant contenir des contaminants potentiels. Dans ce procédé, un bain de scories est utilisé. Dans le cadre de la présente description, on entend par « matériau fibreux », tout matériau constitué en partie ou en totalité de fibres, c'est-à-dire de particules ayant un rapport longueur sur diamètre supérieur à 3 et des côtés approximativement parallèles. Un tel matériau peut être composé d'un seul type de fibre ou d'un mélange de fibres appartenant ou non à la même classe. Ces fibres peuvent être minérales ou organiques d'origine naturelle ou artificielle.

Les matériaux fibreux sont notamment utilisés dans le domaine de la construction, de l'isolation thermique, électrique et/ou phonique et sont potentiellement dangereux pour la santé humaine. En effet, les fibres présentant un diamètre inférieur à 3 µm peuvent pénétrer dans les alvéoles pulmonaires et être ainsi à l'origine de maladies graves.

Dans la description qui va suivre, il sera essentiellement fait référence au traitement de matériaux comportant des fibres d'amiante qui constitue le principal domaine d'application de la présente invention.

Toutefois, on comprendra que d'une façon générale, l'invention peut être appliquée au traitement d'autres matériaux fibreux, potentiellement dangereux pour la santé, et plus particulièrement les matériaux comportant des fibres minérales artificielles comme, en particulier, les fibres de verre, la laine de verre, les fibres de roche, la laine de roche et de basalte, la laine de laitier, les fibres céramiques réfractaires, et d'une façon générale toute fibre vitreuse ou mélange de fibres vitreuses.

L'invention peut encore être appliquée au traitement de fibres minérales artificielles cristallines comme par exemple des fibres d'alumine ou des fibres de titanate de potassium ainsi qu'aux fibres minérales artificielles métalliques comme en particulier la laine d'acier, la laine de cuivre seule ou en mélange avec les matériaux fibreux comportant des fibres minérales artificielles vitreuses telles que définies ci-dessus.

On sait que depuis le 1^{er} janvier 1997, l'usage de l'amiante est interdit en France mais des milliers de tonnes apparaissent chaque année, provenant de la démolition de vieux bâtiments ou de leur assainissement. L'amiante est en effet dangereux du fait de sa cristallisation particulière, en longs cristaux qui forment des fibres.

La technique dite d'enfouissement constitue une première solution permettant la mise en sécurité de l'amiante et des déchets en contenant.

Cette technique consiste à entreposer de façon définitive l'amiante et les déchets amiantés dans des casiers creusés dans le sol et recouverts par un matériau étanche, le tout étant associé à un système de drainage des lixiviats.

Bien que strictement encadrée sur le plan règlementaire, et relativement peu coûteuse, cette technique n'est cependant pas entièrement satisfaisante pour des raisons environnementales évidentes.

De nombreuses recherches ont donc été réalisées dans le but de mettre au point un procédé permettant de traiter les déchets contenant de l'amiante, en particulier les déchets générés par les travaux de désamiantage en génie civil où les opérations de démantèlement d'équipements variés à base de matériaux contenant de l'amiante.

Dans ce contexte, il a été notamment proposé dans le document WO 2008/065031 un procédé d'inertage par fusion plasma, par lequel des matériaux amiantés sont portés à très haute température en insufflant de l'air sur un arc électrique à l'intérieur d'une torche, pour générer un gaz ionisé similaire à une flamme dont la température peut être localement de plusieurs milliers de degré.

Ce procédé, qui fait actuellement l'objet d'une exploitation industrielle, est toutefois d'un coup très élevé en raison d'une consommation énergétique très importante et de l'utilisation d'une torche à plasma de haute technologie nécessitant une maintenance coûteuse.

Ainsi, en raison de ce coût élevé, l'utilisation de ce procédé reste aujourd'hui restreinte.

D'autres procédés faisant appel à un générateur à hautes fréquences, ou à l'addition de fondants tels que le Borax, ou encore à un traitement acide de l'amiante ont été proposés, mais aucun de ces procédés alternatifs n'est entièrement satisfaisant d'un point de vue industriel.

Dans ces conditions, la présente invention a pour but de résoudre le problème technique consistant en la fourniture d'un nouveau procédé de vitrification en continu de matériaux fibreux, en particulier de l'amiante et/ou de matériaux amiantés, dont le coût de mise en oeuvre à l'échelle industrielle est sensiblement inférieur à celui du procédé de vitrification utilisant une torche à plasma actuellement utilisé.

Ainsi, selon un premier aspect, la présente invention a pour objet un procédé de vitrification en continu de matériaux fibreux, en particulier de l'amiante et/ou de matériaux amiantés, caractérisé en ce qu'il comprend les étapes suivantes :
- on prépare un bain de verre en fusion à une température de 1 300 à 1 600°C ;
- on introduit dans ledit bain de verre en fusion, lesdits matériaux fibreux et éventuellement des additifs de fusion choisis afin que ledit bain présente, après ajout de ces matériaux fibreux et additifs de fusion, la composition suivante :
   - SiO₂ : entre 30 et 55 % en poids ;
   - FeO : entre 25 et 45 % en poids ;
   - oxydes alcalins et alcalino-terreux : entre 15 et 25 % en poids ;
- on injecte sous pression un comburant et un combustible dans ledit bain en fusion par l'intermédiaire d'au moins une lance dont une extrémité est immergée dans ledit bain ; ledit comburant étant introduit en une quantité molaire supérieure ou égale à la quantité molaire de combustible nécessaire pour maintenir la température du bain entre 1 300 et 1 600°C ; et
- on abaisse la température d'au moins une partie du verre en fusion de manière à le rendre solide.

Ainsi, il a été découvert, et ceci constitue le fondement de la présente invention, que des composés fibreux, et en particulier des composés amiantés, pouvaient être traités par vitrification dans un four équipé d'au moins une lance permettant d'injecter au sein d'un verre en fusion chargé en matériaux fibreux, un mélange sous pression d'un comburant et d'un combustible, dans des conditions neutres ou légèrement oxydantes, c'est-à-dire dans des conditions où le comburant est introduit en une quantité molaire supérieure ou égale à la quantité molaire de combustibles nécessaire pour maintenir la température du bain entre 1 300 et 1 600°C et obtenir ainsi un vitrifiât amorphe incorporant lesdits matériaux.

L'utilisation d'un four équipé d'une lance a déjà été décrite dans le brevet EP 1 235 889.

Cependant, dans le cas de ce brevet antérieur, ce four était utilisé pour la gazéification de composés carbonés tels que des bois, dans des conditions réductrices, c'est-à-dire en présence d'une quantité de comburant (oxygène) insuffisante pour permettre la combustion desdits composés carbonés, afin de produire un gaz combustible de synthèse.

Un tel procédé de gazéification fonctionnant en conditions réductrices ne peut être utilisé dans le cadre de la vitrification de l'amiante.

Dans le cadre de la présente description, on entend par « verre » tout matériau inorganique amorphe produit par fusion qui se solidifie sans cristalliser comportant :
- des oxydes silicatés et en particulier la silice (SiO₂) ;
- des oxydes alcalins, en particulier Na₂O, K₂O, Li₂O, ou alcalino-terreux (CaO, BaO, MgO) ; et
- des oxydes d'éléments tels que l'aluminium, le fer, le titane et le zinc.

Dans le cadre de la présente description, le terme « amiante » est employé dans son acception la plus générale et couvre les silicates hydratés d'origine rocheuse mécaniquement traités et en particulier les amiantes de type serpentines comme par exemple le chrysotile, seule variété cristalline et les amiantes de type amphiboles qui en comportent cinq dont l'amiante bleu, le crocidolite.

Comme on le comprend, l'originalité du procédé conforme à l'invention réside dans le fait qu'il permet d'inerter les matériaux fibreux, du fait de leur fusion dans un bain de verre dans des conditions telles que le verre obtenu après ajout desdits matériaux fibreux et d'additifs de fusion sélectionnés présente sensiblement la même composition que le verre de départ, de sorte que ces matériaux fibreux après traitement ne présentent plus aucun danger notamment pour la santé. En d'autres termes, le procédé conforme à l'invention ne vise pas seulement à encapsuler les matériaux fibreux dans du verre, mais à les dissoudre complètement par fusion dans des conditions telles que ces matériaux deviennent partie intégrale et composants de ce verre.

L'utilisation d'un mélange comburant/combustible permettant une vitrification des composés fibreux et des additifs de fusion en conditions neutres ou légèrement oxydantes permet, en outre, de parvenir à un traitement des composés fibreux efficace avec un coût raisonnable.

Sous cet aspect, le procédé conforme à l'invention permet de récupérer l'énergie résiduelle du four (notamment l'énergie thermique des gaz) pour la production d'électricité. A la différence du procédé utilisant une torche à plasma et par conséquent une énergie très chère, l'électricité, le procédé conforme à l'invention utilise du gaz, beaucoup moins coûteux et peut, en outre, générer de l'électricité par l'utilisation de la chaleur résiduelle en sortie du four.

Selon une caractéristique particulière du procédé selon l'invention, le comburant et le combustible précités sont injectés dans ledit bain de verre en fusion sous une pression comprise entre 1,2 et 10 atmosphères, de préférence entre 3 et 6 atmosphères.

Selon une autre caractéristique particulière de ce procédé, le comburant précité est introduit dans le bain en une quantité molaire comprise entre 1 et 1,2 fois la quantité molaire de combustible.

Avantageusement, les additifs de fusion précités sont choisis parmi la silice, l'oxyde de fer, des résidus de consommation (ordures ménagères) ou des résidus d'incinération riches en fer, comme par exemple des mitrailles fines de fer, voire même des boites à conserves.

Comme on le comprend, ces additifs sont choisis pour obtenir un mélange à traiter présentant une composition prédéterminée, celle d'un verre et garantissant la dissolution complète des composés fibreux dans le bain en fusion.

Selon une autre caractéristique particulière du procédé selon l'invention, le comburant précité est choisi parmi de l'air ou de l'air enrichi en oxygène, par exemple un air enrichi à 35 % d'oxygène.

D'une façon générale, l'homme du métier comprendra que si l'on utilise de l'air enrichi en oxygène, la consommation de combustible sera réduite ou, à consommation égale, la température obtenue sera supérieure.

Selon une autre caractéristique particulière du procédé selon l'invention, le combustible est choisi parmi le gaz naturel et le fioul.

Une partie de ce combustible peut éventuellement être remplacée par des matériaux carbonés présents dans les composés fibreux, comme par exemple dans le polyester présent dans les composites fibres de verre/polyesters susceptibles d'être traités par le procédé conforme à l'invention.

Une partie de ce combustible peut encore éventuellement être remplacée par des résidus organiques provenant par exemple de bois, plastiques ou ordures ménagères.

Il est à noter que certains des additifs de fusion ajoutés dans le cadre du procédé selon l'invention permettront de diminuer la quantité de combustible utilisé. Par exemple, dans le cas du traitement de l'amiante, un apport de fer sous forme de mitraille fine peut être envisagé. La chaleur d'oxydation du fer permettra de réduire la quantité de combustible injecté. La consommation d'oxygène ne diminuant pratiquement pas, le fer peut donc être considéré dans ce cas comme un combustible.

Selon un second aspect, la présente demande décrit une installation de vitrification en continu de matériaux fibreux, en particulier de l'amiante et/ou de matériaux amiantés, caractérisée en ce qu'elle comprend :
- des moyens pour contenir un bain de verre en fusion ;
- des moyens pour charger lesdits composés fibreux dans ledit bain de verre en fusion ;
- des moyens éventuels pour charger des additifs de fusion ;
- des moyens pour injecter sous pression un comburant et un combustible dans ledit bain en fusion par l'intermédiaire d'au moins une lance dont une extrémité est immergée dans ledit bain ;
- des moyens pour récupérer les gaz chauds issus de la vitrification ; et
- des moyens pour abaisser la température d'au moins une partie du verre en fusion incorporant les matériaux fibreux et additifs de fusion, de manière à la rendre solide.

Selon une caractéristique particulière de cette installation, les moyens pour contenir le bain de verre en fusion sont constitués d'une enceinte cylindrique verticale comportant, dans sa partie supérieure, une ouverture permettant le chargement desdits matériaux fibreux ; une ou plusieurs ouvertures permettant le passage d'une ou plusieurs lances, et, dans sa partie inférieure, au moins une ouverture permettant de prélever au moins une partie du verre en fusion.

Selon une autre caractéristique particulière de cette installation, les ouvertures permettant le passage d'une ou plusieurs lances sont réalisées dans la paroi délimitant la partie supérieure de ladite enceinte.

Selon encore une autre caractéristique particulière de cette installation, l'ouverture permettant le chargement des matériaux fibreux est réalisée dans la paroi délimitant la partie supérieure de ladite enceinte.

D'autres caractéristiques et avantages de l'invention ressortiront à la lecture de la description explicative qui va suivre et de l'exemple donné à titre non limitatif, en référence aux dessins annexés dans lesquels :
- la figure 1 est une vue schématique générale d'une installation de vitrification de composés fibreux selon l'invention ;
- la figure 2 est une vue en coupe transversale d'un mode de réalisation d'un four utilisé dans l'installation précitée.

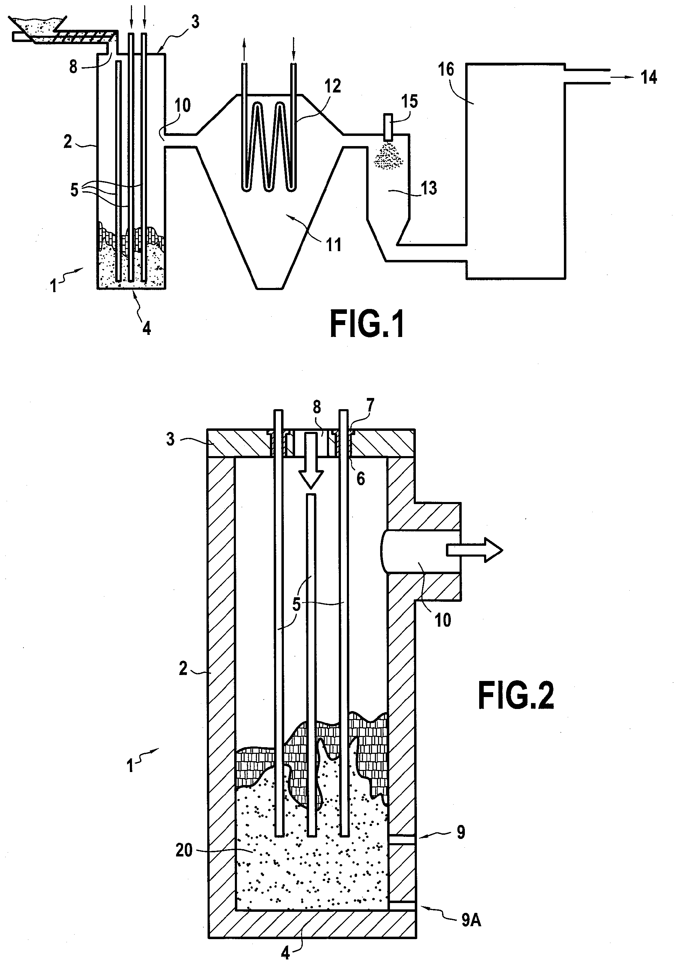

On a représenté à la figure 1, de façon schématique, une installation de vitrification en continu de matériaux fibreux permettant la mise en oeuvre du procédé selon l'invention.

Cette installation comprend essentiellement une enceinte ou four 1, représentée plus en détail à la figure 2.

Ce four 1 est constitué d'une paroi latérale 2, d'une paroi supérieure 3 et d'une paroi inférieure 4 délimitant, dans le mode de réalisation représenté, une enceinte cylindrique verticale dont la hauteur est supérieure au diamètre.

Cette enceinte peut néanmoins avoir toute autre forme, comme par exemple une forme ovoïde ou elliptique.

Les parois 2, 3, 4 sont généralement formées, au moins au niveau de leur face constituant la surface intérieure de l'enceinte destinée à être en contact avec le bain de verre en fusion, d'un matériau réfractaire constitué par exemple d'alumine ou de chrome-magnésie.

Les dimensions du four 1 peuvent être variées et dépendent, comme on le comprend, des quantités de matériaux fibreux à traiter.

A titre d'exemple, le diamètre d'un tel four sera généralement supérieur à 3 m et sa hauteur comprise entre 6 et 12 m.

Dans l'exemple représenté à la figure 2, la paroi latérale 2 est formée d'une seule pièce.

Alternativement, le four 1 peut être constitué de plusieurs, avantageusement trois, éléments superposés verticalement et assemblés ensemble de façon étanche par des brides. Un tel assemblage permet un remplacement aisé de toute section de la paroi latérale ayant subi une dégradation, ladite section pouvant être réparée en atelier avant d'être réutilisée.

Dans l'exemple représenté à la figure 2, la paroi supérieure 3 du four 1 comporte, pour chaque lance 5, une ouverture 6 permettant le passage et le déplacement de ladite lance, ladite ouverture 6 étant pourvue de moyens d'étanchéité 7 constitués par exemple de joints mécaniques ou de manchons en caoutchouc.

Le nombre de lances 5 dépendra de la capacité du four 1 et sera généralement compris entre 1 et 5. Avantageusement, le four 2 sera équipé de trois lances 5, comme représenté à la figure 2, disposées par exemple en triangle pour permettre une agitation du bain de verre fondu.

En outre, l'utilisation d'une pluralité de lances favorise un mouvement ascendant plus homogène des gaz brûlés et permet, en cas de besoin, de remplacer une lance sans interrompre la production en cours.

Alternativement, chaque ouverture de passage d'une lance peut être réalisée dans la partie supérieure de la paroi latérale 2 du four 1, une combinaison d'ouvertures dans la paroi supérieure 3 et dans la paroi latérale 2 du four 1 étant également possible dans le cas d'un four équipé de plusieurs lances.

Chaque lance 5 est généralement constituée d'un tube cylindrique externe creux constitué d'un alliage d'acier et destiné à transporter le comburant (air ou oxygène). Comme le four opère en fusion neutre ou oxydante, un tube cylindrique interne est disposé à l'intérieur du tube externe, de préférence de façon co-axiale, pour transporter le combustible (gaz ou fioul). Ce tube cylindrique interne est légèrement plus court que le tube externe.

Chaque lance 5 présente une longueur adaptée à la longueur du four et une surface intérieure telle que le comburant et le combustible la traversent avec une vélocité acceptable (entre 10 et 30 m/s).

Chaque lance 5 comporte une première extrémité reliée à un dispositif non représenté d'alimentation sous pression en comburant/combustible, par exemple par l'intermédiaire d'un conduit flexible et une seconde extrémité où le mélange sous pression brûle et délivre une flamme, cette seconde extrémité étant destinée à être immergée dans le bain de verre fondu au cours de la mise en oeuvre du procédé selon l'invention.

La paroi supérieure 3 du four 1 est également pourvue d'une ouverture 8 permettant le chargement des matériaux fibreux, cette ouverture 8 étant également pourvue de moyens d'étanchéité tels qu'un sas non représenté. Comme on le comprend, cette disposition permet le chargement des matériaux fibreux à l'aplomb du bain de verre fondu.

Alternativement, cette ouverture de chargement des matériaux fibreux peut être disposée au niveau de la partie supérieure de la paroi latérale 2.

Alternativement encore, l'ouverture 8 ou une deuxième ouverture de chargement des matériaux fibreux peut être prévue en communication, par exemple par l'intermédiaire d'une vis sans fin, avec une trémie montée à l'extérieur du four 1 (voir figure 1).

Avantageusement, cette vis sans fin est hermétiquement reliée au four et munie d'un système de chauffage.

Le four 1 comporte également une ouverture 10 ménagée dans sa paroi latérale 2, située de préférence au deux tiers de la hauteur du four en partant de la paroi inférieure 4, permettant l'échappement des gaz générés dans le four 1 au cours de la vitrification.

Cette ouverture 10 communique avec une chambre 11 équipée d'un échangeur thermique 12 permettant la récupération au moins partielle de l'énergie calorique desdits gaz et par conséquent une optimisation du rendement énergétique de l'installation.

L'échangeur thermique 12 peut être constitué d'un serpentin dans lequel circule un fluide caloporteur destiné à alimenter une turbine non représentée. Ce fluide peut être de l'eau qui donnera de la vapeur ou de préférence de l'air comprimé qui subira de ce fait une expansion thermique permettant d'actionner la turbine.

La chambre 11 est reliée à un dispositif d'épuration 13 apte à éliminer les éventuelles traces de poussières et à fournir un gaz propre en sortie 14.

Le dispositif d'épuration 13 est généralement équipé d'un injecteur de poudre 15 - notamment du carbonate ou bicarbonate de soude - destiné à capter les impuretés gazeuses majeures (chlore et soufre), suivi d'un filtre à air 16.

Pour éviter toute fuite de fumée, on prévoira en bout de circuit, après le dispositif d'épuration un ventilateur du tirage à vitesse variable, contrôlé par la pression en haut du four 1 qui devra être nulle par rapport à l'atmosphère.

Le four 1 comporte également dans la partie inférieure de la paroi latérale 2 une ouverture 9 débouchant dans un réservoir ou avant-creuset non représenté, attenant à la partie inférieure du four 1, et permettant de prélever une partie du verre en fusion formé après addition des matériaux fibreux et des éventuels additifs de fusion et d'en abaisser la température de manière à la rendre solide.

A titre d'exemple, l'ouverture 9 de coulée du verre en fusion est généralement disposée à une hauteur de 50 centimètres (mesurée en partant du fond 4 du four 1).

Le réservoir ou avant-creuset, de conception connue, est ouvert dans sa partie supérieure et délimité par une paroi dont le bord supérieur est sensiblement au-dessus du niveau moyen du bain de verre en fusion dans le four 1. Comme on le comprend, le verre en fusion s'écoule au travers de l'ouverture 9 précitée pour remplir le réservoir jusqu'à une hauteur sensiblement égale à celle du verre fondu dans le four.

La partie supérieure de la paroi de ce réservoir comporte un chenal pouvant être obturé, notamment par de l'argile, entre deux coulées successives. Ce chenal ainsi obturé peut être percé mécaniquement ou thermiquement (au moyen d'un tuyau d'acier alimenté en l'oxygène et qui brûlera à son extrémité).

Le four 1 peut également comporter au niveau de son fond 4 une ouverture 9A (obturée en fonctionnement) permettant notamment de vidanger le four pour son entretien.

En référence à la figure 1, on décrira maintenant les diverses étapes du procédé conforme à l'invention.

Afin de préparer un bain de verre en fusion, le four 1 à vide est préchauffé avec précaution pour éviter de provoquer un choc thermique du matériau réfractaire constituant la paroi interne du four 1. Ce préchauffage peut être réalisé à l'aide d'une ou plusieurs lances 5, et/ou à l'aide d'un brûleur secondaire non représenté que l'on descend dans le four au bout d'un câble. Cette opération peut nécessiter de l'ordre de 2 à 3 heures.

Lorsque la température à l'intérieur du four est d'environ 1 400°C, on introduit par portions successives du verre, provenant de préférence d'un vitrifiât granulé lors d'une coulée précédente.

Durant cette étape, la température est maintenue à environ 1 400°C au moyen d'une ou plusieurs lances 5 délivrant une flamme provenant de la combustion d'un mélange d'air, d'air enrichi en oxygène ou d'oxygène et de gaz ou fioul. Quand le niveau de verre en fusion à l'intérieur du four est suffisant (par exemple lorsque le niveau du verre en fusion atteint une hauteur d'environ 30 à 50 cm à l'intérieur du four), la(les) lance(s) est(sont) immergée(s) dans le bain de verre en fusion 20 afin de maintenir la température de 1 400°C. Cette opération peut nécessiter de l'ordre de 3 à 4 heures.

Les matériaux fibreux sont alors introduits (par portions successives) par l'ouverture 8 en prenant soin d'éviter de trop fortes variations de températures à l'intérieur du verre fondu.

Certains matériaux fibreux (autres que l'amiante) peuvent se présenter sous forme pulvérulente. Dans ce cas, il convient de les amalgamer à un autre matériau tel que par exemple du bitume via la vis sans fin avant leur introduction dans le four. S'il s'agit de quantités importantes et régulières, au moins une lance peut être modifiée pour injecter cette poudre avec l'air dans le bain.

Simultanément ou non, les éventuels additifs de fusion, comme en particulier la silice, le fer ou l'oxyde de fer dans le cas de matériaux amiantés, sont introduits dans le bain de verre fondu de préférence par l'intermédiaire de l'ouverture 8 et de l'éventuel sas.

La quantité de matériaux fibreux, la quantité et la nature des additifs de fusion sont préalablement déterminées, de telle sorte qu'après addition de ces matériaux, le mélange obtenu présente une composition, généralement identique ou très proche de la composition du verre de départ, et répondant à la définition suivante :
- SiO₂ : entre 30 et 55 % en poids ;
- FeO : entre 25 et 45 % en poids ;
- oxydes alcalins et alcalino-terreux : entre 15 et 25 % en poids.

Ainsi, notamment dans le cas de l'amiante, les additifs de fusion modifieront la composition de la charge à traiter et la conduiront dans la zone de fusion idéale.

Selon un mode de réalisation particulier, du verre peut être ajouté, de préférence simultanément, aux matériaux fibreux et aux additifs de fusion précités.

Lorsque l'addition des matériaux fibreux et des additifs de fusion est terminée (le verre ayant atteint un niveau d'environ 1,5 à 2 mètres au-dessus de l'ouverture de coulée 9), on maintient encore le bain en fusion pendant une durée de quelques minutes pour s'assurer de son homogénéité. Chaque lance est alors retirée du bain tout en étant maintenue en fonctionnement juste au-dessus du bain afin de maintenir la température à l'intérieur du four et éviter l'agitation du bain durant la coulée.

On procède ensuite à une opération dite « de coulée » permettant de prélever au moins une partie du verre fondu, de la refroidir et de la conditionner par exemple sous forme granulée.

A cet effet, l'ouverture 9 du four 1 conduisant au réservoir de prélèvement du verre fondu est percée pour permettre la coulée de verre fondu dans le réservoir. Ce perçage de l'ouverture 9 peut être réalisé de façon mécanique à l'aide d'un burin ou de façon thermique à l'aide d'un chalumeau. A l'issue de la coulée, l'ouverture 9 est rebouchée par exemple à l'aide d'argile.

Le verre peut être ainsi prélevé par portions à intervalles réguliers ou alternativement en continu.

De préférence, tout le verre fondu se trouvant au-dessus de l'ouverture 9 sera coulé en une seule fois.

Le verre prélevé est ensuite solidifié aussi vite que possible pour garantir sa stabilité et avantageusement granulé pour être utilisé par exemple comme granulat pour technique routière, pour la fabrication de dallage ou comme agent de sablage. Les matériaux fibreux de départ sont ainsi entièrement dissous dans le verre fondu et parfaitement inertes, leur structure cristalline qui était dangereuse ayant (en particulier dans le cas de l'amiante) complètement changée et toute trace de fibres ayant disparu.

Deux méthodes peuvent être envisagées afin de solidifier le verre en fusion prélevé dans le four.

Une première méthode consiste à laisser le verre s'écouler dans un chenal véhiculant un fort courant d'eau en obtenant ainsi un sable.

Alternativement, le verre peut être coulé dans une cuve d'eau en le laissant tomber d'une hauteur d'environ 3 mètres, de telle façon que le verre puisse acquérir une vélocité suffisante pour pénétrer dans l'eau sans éclater à la surface. On obtient ainsi des grains de 15 à 30 millimètres de diamètre.

L'opération qui vient d'être décrite peut être réitérée en chargeant à nouveau des quantités prédéterminées de composés fibreux et additifs de fusion et éventuellement de verre dans le bain de verre en fusion restant dans le four.

Les gaz directement issus de la réaction de vitrification des composés fibreux sont chauds et, selon une caractéristique particulière du procédé conforme à l'invention, on récupère l'énergie calorifique de ces gaz par transfert à un fluide caloporteur (qui peut être de l'eau ou de préférence de l'air comprimé) apte à actionner une turbine.

Plus précisément, au cours du processus de vitrification, un flux de gaz ascensionnel se produit à l'intérieur du four 1 et s'échappe par l'ouverture 10 pour entrer dans la chambre 11.

Les gaz dont la température est généralement de l'ordre de 1 500°C se refroidissent au contact de l'échangeur thermique 12.

Lorsque les gaz atteignent une température de 200°C environ, l'efficacité de l'échangeur thermique 12 devient relativement médiocre et les gaz sont évacués.

Ils sont acheminés au travers de l'ouverture 10 vers le dispositif d'épuration 13 dans lequel les dernières traces de poussière sont éliminées en fournissant ainsi un gaz propre en sortie 14.

Les exemples suivant illustreront l'invention.

### EXEMPLE 1 - DESTRUCTION DE FIBROCIMENT

Le fibrociment est une des matières les plus difficiles à détruire étant donné la teneur élevée en oxydes de calcium et magnésium qu'il contient.

Cet amiante est dangereux par sa cristallisation particulière en fibres qui furent formées à grande profondeur sous des pressions énormes et des températures relativement modérées.

Le procédé conforme à l'invention permet, notamment par l'ajout de silice et d'oxyde de fer ou de fer, de diluer ces oxydes alcalino-terreux et les fondre à une température modérée en inertant ainsi l'amiante.

### Exemple 1A

### a) Préparation d'un bain de verre fondu

Dans cet exemple, on a utilisé un four de 3 mètres de diamètre et de 8 mètres de haut tel que décrit précédemment.

Ce four à vide a été préchauffé pendant une durée de 2 heures environ jusqu'à une température d'environ 1 400°C, au moyen d'un brûleur d'appoint descendu dans le four au bout d'un câble.

Lorsque la température à l'intérieur du four a atteint environ 1 400°C, on a introduit lentement du verre provenant d'un vitrifiât granulé lors d'une coulée précédente.

Durant cette étape, la température est maintenue à environ 1 400°C au moyen de 3 lances délivrant une flamme provenant de la combustion d'un mélange d'air et de gaz naturel, dans un rapport stoechiométrique O_{2/}gaz de 1,1:1.

Quand le niveau de verre en fusion à l'intérieur du four a atteint une hauteur de 50 cm, les 3 lances ont été immergées dans le bain de verre en fusion afin de maintenir une température de 1 400°C. Les flammes submergées dans le bain de verre donnent une excellente efficacité au procédé.

### b) Introduction des composés fibreux

Dans cet exemple, on a utilisé un fibrociment à base d'amiante (chrysotile) contenant environ 50 % en poids de CaO et 8 % en poids de SiO₂, ainsi que des éléments mineurs tels que MgO, Al₂O₃, ... le reste à 100 % étant essentiellement constitué d'eau d'hydratation ou de cristallisation.

A1 tonne de ce fibrociment, on a ajouté 532 kg de silice et 913 kg d'équivalent FeO.

Ce mélange est réalisé par additions successives à l'intérieur d'un sas d'introduction des composés fibreux.

Ce mélange est introduit dans le four à raison de 100 kg/min lors de chaque ouverture du sas.

Après 4 heures, le niveau dans le four a atteint 1,8 m et le verre fondu obtenu a la composition suivante :
- SiO₂ : 30 % en poids ;
- FeO : 44 % en poids ;
- oxydes alcalins et alcalino-terreux : 25 % en poids ;
- oxyde d'aluminium : 0,5 % en poids ;
- composants mineurs : 0,5 % en poids.

Les 3 lances ont alors été relevées pour arrêter l'agitation du verre tout en maintenant la température du bain pendant une durée d'environ 10 minutes.

L'ouverture de coulée du verre a alors été percée et environ 20 tonnes de verre ont été prélevées en laissant un fond de bain de verre fondu d'une hauteur d'environ 50 cm dans le four.

Le verre ainsi prélevé présentait la même composition que le verre de départ, les matériaux fibreux y ayant été intégralement dissous et ne présentant plus aucun danger.

### c) Les gaz ont été refroidis dans un échangeur de chaleur pour en récupérer l'énergie et produire de l'électricité avant d'être épurés.

Dans les conditions réactionnelles décrites, la consommation de gaz était de 1 409 Nm³/h.

L'échangeur de chaleur a permis la récupération de 7 805 Mcal/h soit 9,1 MWₜₕ.

### Exemple 1B

L'exemple 1A a été reproduit en utilisant en tant que comburant de l'air enrichi à 35 % en oxygène.

Dans ce cas, la consommation en gaz était de 711 Nm³/h et l'énergie récupérée de 2 531 Mcal/h soit 2,95 MWₜₕ.

Comme on le comprend, la teneur en oxygène dans l'air alimentant les lances peut être ajustée pour optimiser la puissance à la turbine.

### Exemple 1C

L'exemple 1B a été reproduit en remplaçant l'oxyde de fer par de la fine mitraille de fer provenant par exemple de boîtes à conserve.

Dans ce cas, pour 1 tonne de fibrociment, on a utilisé 710 kg de fine mitraille de fer.

La quantité de gaz nécessaire à la combustion était de 446 Nm³/h, inférieure à la quantité utilisée dans l'exemple 1A.

En revanche, la chaleur disponible au niveau de l'échangeur n'était que de 765 Mcal/h soit 0,9 MWₜₕ.

Dans cet exemple, la consommation d'oxygène était de 576 Nm³/h.

### EXEMPLE 2 - FIBRES DE VERRE TYPE « E »

Ces fibres classées dangereuses sont aussi difficiles à traiter en raison de leur teneur relativement élevée en oxydes d'alcalino-terreux et en alumine.

### a) Préparation d'un bain de verre fondu

En suivant le mode opératoire de l'exemple 1 a), on a préparé un bain de verre fondu provenant d'un vitrifiât granulé lors d'une coulée précédente.

Dans cet exemple, la température durant la vitrification a été maintenue à environ 1 400°C.

### b) Introduction des composés fibreux

Dans cet exemple, on a utilisé des composites fibres de verre/polyester, contenant environ 22 % de fibres.

La composition moyenne des composites à traiter était la suivante :
- SiO₂ : 56 % en poids ;
- B₂O₃ : 7 % en poids ;
- Al₂O₃ : 14,5 % en poids ;
- MgO : 3 % en poids ;
- CaO : 18,5 % en poids ;
- composés mineurs : 1 % en poids.

A 1 tonne de ces composites, on a jouté 94,6 kg d'oxyde de fer.

Le verre obtenu avait la composition suivante identique à celle du verre de départ :
- SiO₂ : 40 % en poids ;
- FeO : 30 % en poids ;
- oxydes alcalins et alcalino-terreux (CaO, MgO) : 14 % en poids ;
- oxyde d'aluminium (Al₂O₃) : 10 % en poids ;
- oxyde de bore (B₂O₃) : 5 % en poids ;
- composés mineurs : 1 % en poids.

## Revendications

1. Procédé de vitrification en continu de matériaux fibreux, en particulier de l'amiante et/ou de matériaux amiantés, **caractérisé en ce qu'**il comprend les étapes suivantes :
- on prépare un bain de verre en fusion à une température de 1 300 à 1 600°C ;
- on introduit dans ledit bain de verre en fusion, lesdits matériaux fibreux et éventuellement des additifs de fusion choisis afin que ledit bain présente, après ajout de ces matériaux fibreux et additifs de fusion, la composition suivante :
- SiO₂ : entre 30 et 55 % en poids ;
- FeO : entre 25 et 45 % en poids ;
- oxydes alcalins et alcalino-terreux : entre 15 et 25 % en poids ;
- on injecte sous pression un comburant et un combustible dans ledit bain en fusion par l'intermédiaire d'au moins une lance dont une extrémité est immergée dans ledit bain ; ledit comburant étant introduit en une quantité molaire supérieure ou égale à la quantité molaire de combustible nécessaire pour maintenir la température du bain entre 1 300 et 1 600°C ; et
- on abaisse la température d'au moins une partie du verre en fusion de manière à le rendre solide.

2. Procédé selon la revendication 1, **caractérisé en ce que** le comburant et le combustible précités sont injectés dans ledit bain de verre en fusion sous une pression comprise entre 1,2 et 10 atmosphères, de préférence entre 3 et 6 atmosphères.

3. Procédé selon la revendication 1 ou 2, **caractérisé en ce que** le comburant précité est introduit dans le bain en une quantité molaire comprise entre 1 et 1,2 fois la quantité molaire de combustible.

4. Procédé selon l'une des revendications 1 à 3, **caractérisé en ce que** les additifs de fusion précités sont choisis parmi la silice, l'oxyde de fer, des résidus de consommation (ordures ménagères) ou des résidus d'incinération riches en fer.

5. Procédé selon l'une des revendications 1 à 4, **caractérisé en ce que** le comburant précité est choisi parmi de l'air ou de l'air enrichi en oxygène, par exemple un air enrichi à 35 % d'oxygène.

6. Procédé selon l'une des revendications 1 à 5, **caractérisé en ce que** le combustible est choisi parmi le gaz naturel et le fioul.

## Patentansprüche

1. Verfahren zur fortlaufenden Verglasung von Fasermaterialien, insbesondere von Asbest und/oder asbesthaltigen Materialien, **dadurch gekennzeichnet, dass** es die folgenden Schritte umfasst:
- Herstellen eines Bades aus geschmolzener Glasmasse mit einer Temperatur von 1300 bis 1600 °C,
- Einbringen der Fasermaterialien und eventuell von ausgewählten Schmelzadditiven in das Bad aus geschmolzener Glasmasse, damit das Bad nach der Zugabe dieser Fasermaterialien und Schmelzadditive die folgende Zusammensetzung aufweist:
- SiO₂: zwischen 30 und 55 Gew.-%,
- FeO: zwischen 25 und 45 Gew.-%,
- Alkali- und Erdalkalioxide: zwischen 15 und 25 Gew.-%,
- Einspritzen unter Druck eines Verbrennungsmittels und eines Brennstoffes in das Schmelzbad mittels wenigstens einer Lanze, von welcher ein Ende in das Bad eingetaucht ist, wobei das Verbrennungsmittel in einer Molmenge eingebracht wird, die größer als die oder gleich der Molmenge an Brennstoff ist, welche erforderlich ist, um die Temperatur des Bades zwischen 1300 et 1600 °C zu halten, und
- Senken der Temperatur von wenigstens einem Teil der geschmolzenen Glasmasse, um sie zu verfestigen.

2. Verfahren nach Anspruch 1, **dadurch gekennzeichnet, dass** das vorgenannte Verbrennungsmittel und der vorgenannte Brennstoff unter einem Druck im Bereich zwischen 1,2 und 10 Atmosphären, vorzugsweise zwischen 3 und 6 Atmosphären, in das Bad aus geschmolzener Glasmasse eingespritzt werden.

3. Verfahren nach Anspruch 1 oder 2, **dadurch gekennzeichnet, dass** das vorgenannte Verbrennungsmittel in einer Molmenge im Bereich zwischen dem 1- und 1,2-fachen der Molmenge an Brennstoff in das Bad eingebracht wird.

4. Verfahren nach einem der Ansprüche 1 bis 3, **dadurch gekennzeichnet, dass** die vorgenannten Schmelzadditive aus Siliziumdioxid, Eisenoxid, Verbrauchsrückständen (Haushaltsabfällen) oder eisenreichen Verbrennungsrückständen ausgewählt sind.

5. Verfahren nach einem der Ansprüche 1 bis 4, **dadurch gekennzeichnet, dass** das vorgenannte Verbrennungsmittel aus Luft oder aus mit Sauerstoff angereicherter Luft, zum Beispiel einer mit 35 % Sauerstoff angereicherter Luft ausgewählt ist.

6. Verfahren nach einem der Ansprüche 1 bis 5, **dadurch gekennzeichnet, dass** der Brennstoff aus Erdgas und Heizöl ausgewählt ist.

## Claims

1. A process for the continuous vitrification of fibrous materials, in particular asbestos and/or asbestos-containing materials, **characterized in that** it comprises the following steps:
- a bath of molten glass at a temperature of 1300°C to 1600°C is prepared;
- introduced into said bath of molten glass are said fibrous materials and optionally melting additives chosen so that said bath has, after addition of these fibrous materials and melting additives, the following composition:
- SiO₂: between 30% and 55% by weight;
- FeO: between 25% and 45% by weight;
- alkali and alkaline-earth metal oxides: between 15% and 25% by weight;
- an oxidizer and a fuel are injected under pressure into said molten bath by means of at least one lance, one end of which is immersed in said bath; said oxidizer being introduced in a molar amount greater than or equal to the molar amount of fuel needed to maintain the temperature of the bath between 1300°C and 1600°C; and
- the temperature of at least one portion of the molten glass is lowered so as to render it solid.

2. The process as claimed in claim 1, **characterized in that** the aforementioned oxidizer and fuel are injected into said bath of molten glass under a pressure of between 1.2 and 10 atmospheres, preferably of between 3 and 6 atmospheres.

3. The process as claimed in claim 1 or 2, **characterized in that** the aforementioned oxidizer is introduced into the bath in a molar amount of between 1 and 1.2 times the molar amount of fuel.

4. The process as claimed in one of claims 1 to 3, **characterized in that** the aforementioned melting additives are selected from silica, iron oxide, consumer residues (municipal waste) or iron-rich incineration residues.

5. The process as claimed in one of claims 1 to 4, **characterized in that** the aforementioned oxidizer is selected from air or oxygen-enriched air, for example enriched air containing 35% of oxygen.

6. The process as claimed in one of claims 1 to 5, **characterized in that** the fuel is selected from natural gas and fuel oil.
